# EUROPÄISCHE PATENTSCHRIFT

(11) **EP 3 728 455 B1**
(45) Veröffentlichungstag und Bekanntmachung des Hinweises auf die Patenterteilung: **17.08.2022**
(21) Anmeldenummer: 18830769.8
(22) Anmeldetag: 17.12.2018
(51) Int. Cl.: C08L 21/00, C08L 11/00, C08L 7/00, C08K 3/04, C08K 3/22, F16F 1/36

(54) **ARTIKEL, INSBESONDERE EIN LUFTFEDERBALG, EIN METALL-GUMMI-ELEMENT ODER EIN SCHWINGUNGSDÄMPFER**
ARTICLE, IN PARTICULAR AIR SPRING BELLOWS, A METAL-RUBBER ELEMENT, OR A VIBRATION DAMPER
ARTICLE, EN PARTICULIER SOUFFLET DE RESSORT PNEUMATIQUE, ÉLÉMENT EN MÉTAL ET CAOUTCHOUC OU AMORTISSEUR DE VIBRATIONS

(30) Priorität: 21.12.2017 DE 102017223538
(43) Veröffentlichungstag der Anmeldung: 28.10.2020
(73) Patentinhaber: ContiTech Luftfedersysteme GmbH, 30165 Hannover (DE)
(72) Erfinder: LEETHAUS, Thorsten, 30419 Hannover (DE); BORVITZ, Dieter, 30419 Hannover (DE); SCHOBERT, Klaus, 31552 Nienburg (DE); PASSON-WESSELOH, Barbara, 37073 Göttingen (DE); STORRE, Jens, 37176 Nörten-Hardenberg (DE)
(74) Vertreter: Continental Corporation
(86) Internationale Anmeldenummer: PCT/EP2018/085131
(87) Internationale Veröffentlichungsnummer: WO 2019/121465

(56) Entgegenhaltungen:
- EP-A1- 3 144 426
- WO-A1-2013/072168
- WO-A1-2017/139115
- CN-A- 104 017 278
- CN-A- 104 629 134
- CN-A- 104 650 428
- CN-A- 105 802 233
- US-A1- 2004 009 839
- US-A1- 2008 110 552
- US-A1- 2011 071 245
- US-A1- 2011 207 872
- US-A1- 2013 178 566
- US-A1- 2015 306 854

## Beschreibung

Die Erfindung betrifft einen Artikel mit einem ein- oder mehrschichtigen Grundkörper mit elastischen Eigenschaften, insbesondere einen Luftfederbalg, ein Metall-Gummi-Element oder einen Schwingungsdämpfer.

Artikel mit elastischen Eigenschaften, die zur Federung bspw. von Kraftfahrzeugen oder Schienenfahrzeugen eingesetzt werden und / oder der Schwingungsdämpfung dienen, werden unter Verwendung elastomerer Mischungen, auch als Kautschukmischungen bezeichnet, hergestellt. Diese, für die grundlegenden Eigenschaften solcher Artikel üblicherweise verwendeten elastomeren Mischungen sind hinreichend bekannt. Artikel mit herausragenden elastischen Eigenschaften, wie bspw. Metall-Gummi Elemente oder Schwingungsdämpfer, enthalten vorzugsweise vulkanisierte Kautschukmischungen, die überwiegend auf Naturkautschuk (NR) und / oder Polyisoprenkautschuk (IR) basieren. Artikel mit einer sehr guten Witterungs-, Mineralöl- und Wärmebeständigkeit, wie bspw. Luftfederbälge, enthalten vorzugsweise vulkanisierte Kautschukmischungen, die überwiegend auf Chloroprenkautschuk (CR) basieren.

Allerdings zeigen Artikel mit diesen elastomeren Mischungen deutliche Nachteile im Brandverhalten. Im Brandfall entstehen unter anderem dichte Rauchgase. Beim Verbrennungsprozess der genannten elastomeren Mischungen, die überwiegend auf NR und / oder IR basieren, ist die Wärmefreisetzungsrate besonders hoch. Beim Verbrennungsprozess der elastomeren Mischungen, die überwiegend auf CR basieren, ist das entstehende Rauchgas für Mensch und Tier toxisch.

Aufgrund der in den letzten Jahren gestiegenen Anforderungen hinsichtlich des Brandschutzes, welche sich vor allem in der verschärften Brandschutznorm EN45545 zeigt, ergibt sich ein erhöhter Bedarf an brandschutzoptimierten Polymerartikeln. Diesen Brandschutzanforderungen können sowohl die genannten elastomeren Mischungen, die überwiegend auf NR und / oder IR basieren, vor allem aufgrund der geforderten maximalen Wärmefreisetzungsrate, als auch die flammwidrigen elastomeren Mischungen, die überwiegend auf CR basieren, insbesondere aufgrund der geforderten Rauchgastoxizität, nicht mehr gerecht werden. Somit erfüllen die Artikel, welche diese elastomeren Mischungen enthalten, die verschärften Anforderungen zumeist nicht mehr.

Eine übliche Methode das Brandverhalten von Kautschukmischungen zu verbessern, ist das direkte Einmischen von zum Teil vergleichsweise großen Mengen brandhemmender Substanzen. Allerdings führt diese Maßnahme bei den betroffenen Mischungen in der Regel dazu, dass sich die physikalischen Eigenschaften, insbesondere bspw. die Härte, die für den Einsatz in dynamischen Anwendungen relevant ist, verschlechtern. An den betroffenen Artikeln zeigt sich das insbesondere daran, dass sich die Federungs-, Setz- bzw. Schwingungseigenschaften signifikant verschlechtern.

Die Aufgabe der Erfindung besteht nun darin, einen Artikel bereitzustellen, der sich durch ein optimiertes Brandschutzverhalten auszeichnet, um die verschärften Anforderungen, insbesondere die in EN-45545 beschriebenen, zu erfüllen. Insbesondere soll wenigstens der in der Norm beschriebene Hazard Level 2 erreicht werden. Gleichzeitig sollen die notwendigen physikalischen Eigenschaften des Artikels, insbesondere bspw. die Härte, auf einem vergleichbaren Niveau verbleiben.

Gelöst wird diese Aufgabe dadurch, dass der Artikel einen ein- oder mehrschichtigen Grundkörper mit elastischen Eigenschaften besitzt, wobei wenigstens eine Schicht D des Grundkörpers aus einer Kautschukmischung aufgebaut ist, die frei von halogenhaltigen Flammschutzmitteln ist und wenigstens einen Ruß mit einer BET-Oberfläche gemäß DIN-ISO 9277 zwischen 35 und 140 m²/g und einer Öl-Absorptionszahl (OAN) gemäß ISO 4656 zwischen 70 und 140 ml /100g enthält.

Überraschenderweise hat sich gezeigt, dass der Einsatz von derartigen feinteiligen Rußen einen positiven Einfluss auf das Brandverhalten hat. Hierdurch ist es möglich, die Menge an weiteren zusätzlichen Flammschutzmitteln signifikant zu reduzieren. Durch die geringere notwendige Menge an zusätzlichen Flammschutzmitteln wird die dynamische Tauglichkeit der Kautschukmischung verbessert, was zu einer verlängerten Lebensdauer des Artikels führt. Insbesondere bei Einsatz eines Verschnittes aus Chloroprenkautschuk und Naturkautschuk kann die Menge an zusätzlichen Flammschutzmitteln ohne Einbußen in den dynamischen Eigenschaften der Kautschukmischung verringert werden.

Erfindungsgemäß wird wenigstens ein Ruß mit einer BET-Oberfläche gemäß DIN-ISO 9277 zwischen 35 und 140 m²/g und einer Öl-Absorptionszahl (OAN) gemäß ISO 4656 zwischen 70 und 140 ml/100g eingesetzt. Dies bedeutet, dass bevorzugt Ruße mit der Kennung N-1xy, N-2xy, N-3xy, N-4xy oder N-5xy verwendet werden, wobei x und y jeweils unabhängig voneinander eine ganze Zahl zwischen 0 und 9 sein kann. Die Kennung der Ruße erfolgt gemäß der Klassifizierungstabelle der ASTM D 1765-06. Besonders gute Eigenschaften erzielen Ruße des Typs N550 und N339.

Die genannten Ruße mit der Kennung N-1xy, N-2xy, N-3xy, N-4xy oder N-5xy können dabei alleine oder in Kombination eingesetzt werden.

In einer besonders bevorzugten Ausführungsform finden Ruße des Typs N339 und N550 jeweils alleine oder in Kombination Anwendung. Diese beiden Typen sind hinsichtlich Brandschutzverhalten, hier insbesondere N339, Abriebfestigkeit, hier insbesondere N550 und dynamische Eigenschaften besonders gut geeignet.

Die Gesamtmenge des eingesetzten Rußes beträgt bevorzugt 5 bis 30 phr. Wird mehr als ein Ruß mit den Eigenschaften gemäß Anspruch 1 eingesetzt, so bezieht sich die Menge von 5 bis 30 phr auf die Gesamtmenge an Rußen mit den Eigenschaften gemäß Anspruch 1.

In einer bevorzugten Ausfuhrungsform enthält die Kautschukmischung der Schicht D noch wenigstens ein weiteres Flammschutzmittel.

Es kommen hierbei insbesondere Stannate, wie Zinkstannat oder Zinkhydroxystannat, weitere Hydroxide, wie Magnesiumhydroxid oder Calciumhydroxid, Cyanurate, wie Melamincyanurat, Borate, wie Zinkborat oder Calciumborat, phosphorhaltige Komponenten, wie Resorcinoldiphosphat, Melaminphosphat oder aromatische Polyphosphate, stickstoffhaltige Komponenten, wie Ammoniumphosphat, Intumeszenzgemische, Carbonate, wie Calciumcarbonat oder Magnesiumcarbonat, oder Blähgraphit in Frage.

Intumeszenzgemische blähen zu Schäumen auf. Sie werden benutzt, um brennbare Materialien wie Kunststoffe oder Holz, aber auch Stahl, der bei erhöhter Temperatur seine Festigkeit einbüßt, gegen die Einwirkung von Wärme und Feuer zu schützen. Gegebenenfalls können auch noch geringe Mengen an Antimontrioxid, trotz der gesundheitsgefährdenden Wirkung, in Kombination mit wenigstens einem der genannten Flammschutzmittel verwendet werden.

Besonders vorteilhaft hat sich allerdings gezeigt, wenn die Kautschukmischung der Schicht D noch wenigstens Zinkhydroxystannat oder Zinkstannat alleine oder in Kombination enthält. Zinkhydroxystannat oder Zinkstannat werden bevorzugt in einer Gesamtmenge von 0,5 bis 5 phr verwendet und zeigen besonders gute Vorteile hinsichtlich der Rauchgasdichte.

In einer vorteilhaften Ausgestaltung enthält die Kautschukmischung der Schicht D noch wenigstens einen Säurefänger, der die Toxizität des entstehenden Rauchgases weiter reduziert. Bei dem Säurefänger handelt es sich bevorzugt um wenigstens ein Oxid, wobei Calciumoxid und Magnesiumoxid jeweils alleine oder in Kombination besonders gut geeignet sind.

Die Kautschukmischung der Schicht D enthält wenigstens eine Kautschukkomponente, die bevorzugt ausgewählt ist aus der Gruppe, bestehend aus Ethylen-Propylen-Mischpolymerisat (EPM) und / oder Ethylen-Propylen-Dien-Mischpolymerisat (EPDM) und / oder Nitrilkautschuk (NBR) und / oder caboxylierter Nitrilkautschuk (XNBR) und / oder (teil)hydrierter Nitrilkautschuk (HNBR) und / oder Fluor-Kautschuk (FKM) und / oder Chloropren-Kautschuk (CR) und / oder Naturkautschuk (NR) und/ oder epoxidierter Naturkautschuk (ENR) und / oder Isopren-Kautschuk (IR) und / oder Styrol-Butadien-Kautschuk (SBR) und/oder caboxylierter Styrol-Butandien-Kautschuk (XSBR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder alkyliertes chlorsulfoniertes Polyethylen (ACSM) und / oder Polyepichlorhydrin-kautschuke (CO ; ECO ; ETER) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Polyurethan (PU).

Die genannten Kautschuke können alleine oder im Verschnitt eingesetzt werden.

Bevorzugt besteht die Kautschukkomponente der Kautschukmischung der Schicht D aus einem Kautschuk oder aus einem Kautschukverschnitt aus wenigstens zwei Kautschuken, die jeweils der Mischung eine primär schwere Entflammbarkeit verleihen und/ oder gute physikalische Eigenschaften zur Verwendung in dynamisch hoch belasteten Artikeln besitzen. Hierzu zählen insbesondere NR, ENR, IR, CR, CM, CSM, ACSM, BR, NBR, XNBR, HNBR. In einer besonders bevorzugten Ausführungsform besteht die Kautschukkomponente der Kautschukmischung der Schicht D aus 100 phr CR oder aus einem Kautschukverschnitt aus CR und NR.

Der Grundkörper kann entweder nur aus der Schicht D aufgebaut sein oder aber wenigstens eine weitere Schicht enthalten.

Sind weitere Schichten vorhanden, so bildet die Schicht D bevorzugt die äußerste nach außen weisende Schicht des Artikels.

Möglich ist aber auch, dass die Schicht D sich zwischen weiteren Schichten eingebettet ist.

Handelt es sich bei der Schicht D um die äußerste Schicht oder ist die Schicht D zwischen weiteren Schichten eingebettet, so ist es in einer bevorzugten Ausführungsform möglich, dass die Schicht D den Grundkörper nicht vollständig umfasst, sondern lediglich teilweise vorhanden ist, vor allem an den Stellen, die hinsichtlich der Brandgefahr besonders exponiert sind.

So kann zum Beispiel eine weitere Schicht A vorhanden sein, welche die so genannte "Innenkappe" bildet und die aus einer Elastomermischung aufgebaut ist und besonders gute elastische Eigenschaften besitzt. Die Elastomermischung ist eine vulkanisierbare, bevorzugt thermoplastfreie, Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), caboxylierter Nitrilkautschuk (XNBR), (teil)hydrierter Nitrilkautschuk (HNBR), Fluor-Kautschuk (FKM), Chloropren-Kautschuk (CR), Naturkautschuk (NR), epoxidierter Naturkautschuk (ENR), Isopren-Kautschuk (IR), Styrol-Butadien-Kautschuk (SBR), caboxylierter Styrol-Butandien-Kautschuk (XSBR), Butylkautschuk (HR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM), Chlorsulfoniertes Polyethylen (CSM), Alkyliertes Chlorsulfoniertes Polyethylen (ACSM), Polyepichlorhydrinkautschuke (CO; ECO; ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes ist möglich.

Welcher Kautschuktyp bevorzugt wird, hängt von der Artikelart und der Anforderung an den einzelnen Artikel ab. Die üblichen Mischungsingredienzien umfassen wenigstens einen Vernetzer oder ein Vernetzersystem (Vernetzungsmittel und Beschleuniger). Zusätzliche Mischungsingredienzien sind zumeist wenigstens noch ein Füllstoff und/oder wenigstens ein Verarbeitungshilfsmittel und/oder wenigstens einen Weichmacher, wie bspw. Phosphorsäureesterweichmacher, und/oder wenigstens ein Alterungsschutzmittel sowie gegebenenfalls weitere Zusatzstoffe, wie z.B. Farbpigmente, Verstärkungsfasern, etc.

Diesbezüglich wird auf den allgemeinen Stand der Kautschukmischungstechnologie verwiesen.

Die Zusammensetzung der Kautschukmischung der Schicht A kann qualitativ und / oder quantitativ gleich oder verschieden der Kautschukmischung der Schicht D sein.

Ist die Kautschukmischung der Schicht A qualitativ und quantitativ identisch zur Kautschukmischung der Schicht D, d.h. ebenso brandhemmend ausgestattet, so können im Brandfall die sich bildenden brandfördernden Gase und Substanzen nicht oder nur verzögernd nach Außen treten und einen Artikelbrand somit nicht oder nur weniger als üblich verstärken. Ebenso werden etwaige vorhandene und teilweise schnell schmelzende Festigkeitsträgerschichten, siehe Schicht B, hierdurch besser geschützt oder treten nicht nach außen.

Des Weiteren kann in einer besonderen Ausführungsform wenigstens eine Schicht B vorhanden, die aus wenigstens einem Festigkeitsträger gebildet wird. Bevorzugt handelt es sich hierbei um ein Cordgewebe aus einer oder mehreren Lagen, bevorzugt aus zwei Lagen, die eine gute Haftung zur Schicht A aufweisen. In einer ganz besonders bevorzugten Ausführungsform handelt es sich hierbei um ein BiStretch-Gewebe, wie es bspw. in WO 2016045813 A1 beschrieben wird.

Als Materialien für die Schicht B können alle bekannten synthetischen und natürlichen Materialien alleine oder in Kombination, d.h. als Hybridgewebe, verwendet werden.

Als synthetische Materialien kommen insbesondere synthetische Polymere, wie bspw. Acrylnitril, Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, Polyvinylalkohol in Frage.

Bei den natürlichen Materialien kann es sich um Steinwolle oder Asbest oder um Baumwolle, Flachs oder Hanf, oder um Wolle oder Seide, handeln.

Anorganische Materialien wie Glas, Keramik, Kohlenstoff (Carbon), Metall, wie bspw. Stahl, oder Gestein, wie bspw. Basalt, sind ebenso denkbar.

Vorzugsweise handelt es sich um Polyamid, insbesondere PA6.6, oder Polyester alleine oder in Kombination.

Zur Erzielung einer ausreichenden Konfektionsklebrigkeit für den Herstellprozesses des Artikels kann das Cordgewebe einseitig oder beidseitig gummiert bzw. friktioniert sein. Zur Gummierung kann bevorzugt entweder eine Zusammensetzung verwendet werden, die quantitativ und / oder qualitativ gleich der Zusammensetzung für die Schicht C oder quantitativ und / oder qualitativ gleich der Zusammensetzung für die Schicht A ist. Dies vereinfacht den Herstellprozess des Artikels und trägt zu einem dynamisch tauglichen Haftungsverbund mit bei.

In einer weiteren bevorzugten Ausführungsform kann der Artikel noch wenigstens eine zusätzliche Schicht C enthalten.

Die Schicht C bildet dann die so genannte "Außenkappe" des Artikels. Die Schicht C kann einlagig oder zweilagig ausgebildet. Die Elastomermischung der Schicht C ist eine vulkanisierbare, bevorzugt thermoplastfreie, Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), caboxylierter Nitrilkautschuk (XNBR), (teil)hydrierter Nitrilkautschuk (HNBR), Fluor-Kautschuk (FKM), Chloropren-Kautschuk (CR), Naturkautschuk (NR), epoxidierter Naturkautschuk (ENR), Isopren-Kautschuk (IR), Styrol-Butadien-Kautschuk (SBR), caboxylierter Styrol-Butandien-Kautschuk (XSBR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM), Chlorsulfoniertes Polyethylen (CSM), Alkyliertes Chlorsulfoniertes Polyethylen (ACSM), ), Polyepichlorhydrinkautschuke (CO; ECO; ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes ist möglich.

Welcher Kautschuktyp bevorzugt wird, hängt von der Artikelart ab. Die üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Haftvermittler, Flammschutzmittel, Verstärkungsfasern.

Diesbezüglich wird auf den allgemeinen Stand der Kautschukmischungstechnologie verwiesen.

Es ist auch möglich, dass der Artikel noch wenigstens eine weitere Schicht E auf der Basis wenigstens eines Thermoplasts enthält. Als Thermoplaste können zum Beispiel Polyolefin, insbesondere Polyethylen (PE), wie LD-PE, LLD-PE, UHMW-PE, oder Polypropylen (PP), Polystyrol (PS), Polyamid (PA), beispielsweise PA6 oder PA6.6, Polyester, beispielsweise PET, PEN oder PBT verwendet werden. Die Schicht E ist in einer bevorzugten Ausführungsform als Folie ausgebildet. Besonders gut geeignet hat sich die Verwendung von PE-Folie, da diese insbesondere bei peroxidisch vernetzenden Elastomermischungen einen besonders guten Haftungsverbund bildet und somit ggf. auf weitere Haftvermittler verzichtet werden kann. Je nach Art des Artikels und nach Art der weiteren Schichten ist die Schicht E besonders gut haftungssteigernd. Sie kann auf den Artikelrohling mit Hilfe eines Wärmestrahlers und Druck aufgebracht werden.

Bei dem Artikel handelt es sich bevorzugt um einen Luftfederbalg, um ein Metall-Gummi-Element, einen Schwingungsdämpfer oder um ein Dämpfungselement eines Lagers, einer Buchse oder einer Schichtfeder oder Konusfeder. Der Artikel kann aber auch ein schlauchförmiger Körper sein. Schlauchförmige Körper sind bspw. Förderschläuche aller Art, Luftfederbälge (Kreuzlagenbälge, Axialbälge) und Kompensatoren in verschieden Ausführungen (z.B. Torsionskompensator, Lateralkompensator). Ebenso kann der Artikel ein Antriebsriemen sein.

Der Artikel ist bevorzugt ein Luftfederbalg, ein Metall-Gummi-Element, ein Schwingungsdämpfer oder ein Lager, bspw. Kastenlager oder ein Konuslager, insbesondere ein Formartikel für gummigefederte Schienenfahrzeugräder.

## Patentansprüche

1. Artikel mit einem ein- oder mehrschichtigen Grundkörper mit elastischen Eigenschaften, **dadurch gekennzeichnet, dass** wenigstens eine Schicht D des Grundkörpers aus einer Kautschukmischung aufgebaut ist, die frei von halogenhaltigen Flammschutzmitteln ist und wenigstens einen Ruß mit einer BET-Oberfläche gemäß DIN-ISO 9277 zwischen 35 und 140 m²/g und einer Öl-Absorptionszahl (OAN) gemäß ISO 4656 zwischen 70 und 140 ml/100g und zusätzlich Zinkhydroxystannat oder Zinkstannat oder eine Kombination aus Zinkhydroxystannat und Zinkstannat enthält und wobei der Artikel ein Luftfederbalg, ein Metall-Gummi-Element, ein Schwingungsdämpfer, ein Dämpfungselement eines Lagers, einer Buchse oder einer Schichtfeder oder Konusfeder ist.

2. Artikel nach Anspruch 1, **dadurch gekennzeichnet, dass** die Menge an Ruß 5 bis 30 phr beträgt.

3. Artikel nach einem der Ansprüche 1 bis 2, **dadurch gekennzeichnet, dass** die Schicht D als Kautschukkomponente 100 phr CR oder einen Verschnitt aus CR und NR (CR/NR) enthält.

## Claims

1. Article having a single- or multilayered main body having elastic properties, **characterized in that** at least one layer D of the main body is constructed from a rubber mixture which is free from halogen-containing flame retardants and contains at least one carbon black having a BET surface area according to DIN-ISO 9277 between 35 and 140 m²/g and an oil absorption number (OAN) according to ISO 4656 between 70 and 140 ml/100g and additionally contains zinc hydroxystannate or zinc stannate or a combination of zinc hydroxystannate and zinc stannate and wherein the article is an air spring bellows, a metal-rubber element, a vibration damper, a damping element of a bearing, of a bushing or of a multilayered spring or conical spring.

2. Article according to Claim 1, **characterized in that** the amount of carbon black is 5 to 30 phr.

3. Article according to either of Claims 1 or 2, **characterized in that** the layer D contains 100 phr of CR or a blend of CR and NR (CR/NR) as the rubber component.

## Revendications

1. Article comportant un corps de base monocouche ou multicouche comportant des propriétés élastiques, **caractérisé en ce qu'**au moins une couche D du corps de base est construite à partir d'un mélange de caoutchoucs qui est exempt d'agents ignifugeants halogénés et contient au moins une suie dotée d'une surface BET selon la norme DIN-ISO 9277 comprise entre 35 et 140 m²/g et d'un indice d'absorption d'huile (OAN) selon la norme ISO 4656 compris entre 70 et 140 ml/100 g et de plus un hydroxystannate de zinc ou un stannate de zinc ou une combinaison d'hydroxystannate de zinc et de stannate de zinc et l'article étant un soufflet pneumatique, un élément de métal-gomme, un amortisseur de vibrations, un élément d'amortissement d'un palier, d'une douille ou d'un ressort multicouche ou d'un ressort conique.

2. Article selon la revendication 1, **caractérisé en ce que** la quantité de suie est de 5 à 30 phr.

3. Article selon l'une quelconque des revendications 1 et 2, **caractérisé en ce que** la couche D contient 100 phr de CR en tant que composant de caoutchouc ou un coupage de CR et de NR (CR/NR).
